# EUROPÄISCHE PATENTSCHRIFT

(11) **EP 2 881 526 B1**
(45) Veröffentlichungstag und Bekanntmachung des Hinweises auf die Patenterteilung: **04.09.2019**
(21) Anmeldenummer: 14003936.3
(22) Anmeldetag: 11.11.2014
(51) Int. Cl.: E04H 15/36, A01K 1/00

(54) **PLANENSYSTEM**
TARPAULIN SYSTEM
SYSTÈME DE BÂCHES

(30) Priorität: 04.11.2014 EP 14003704; 09.12.2013 DE 202013009884 U
(43) Veröffentlichungstag der Anmeldung: 10.06.2015
(73) Patentinhaber: JoPe GmbH, 87653 Eggenthal (DE)
(72) Erfinder: RATKA, Johann, 83457 Unterneukirchen (DE)
(74) Vertreter: Gössmann, Christoph Tassilo

(56) Entgegenhaltungen:
- EP-A1- 0 504 074
- GB-A- 2 382 594
- US-A- 3 863 659
- US-A- 6 073 587
- US-A1- 2010 126 545

## Beschreibung

Die Erfindung betrifft ein Planensystem und ein Überdachungsnachrüstsystem.

Überdachungen von Pferdeboxen sind bereits im Handel, allerdings handelt es sich dabei um Systeme, die aus einer Vielzahl von Rohren bestehen, die als Quer- und Längsverstrebungen dienen und sehr aufwendig aufgebaut sind, so dass sie sowohl umständlich als auch zeitaufwendig aufzubauen, wie auch zu versenden sind. Des Weiteren sind derartige Überdachungen nach dem Stand der Technik instabil und nicht windstabil.

GB 2382594 beschreibt einen tragbaren Stall, der Wandpanele aufweist, die zusammen passen und eine rechteckige Einfriedung für ein Tier bilden. Eine Dachanordnung, die einen Dachrahmen, ein textiles Dachpanel aufweist, das sich zwischen den gegenüberliegenden Rändern des Rahmens und eines verstellbaren Spannmittels für das Dachpanel erstreckt.

US 6073587 beschreibt einen Unterstand für große Tiere, der aus einer Vielzahl an vorgefertigten Panelen besteht, die Seitenpanele sind in einer senkrechten Anordnung mit miteinander verbunden, wobei eine Bedeckung über ein faltbares Material erfolgt. Ein Stallabteil, sozusagen 2 oder 3, die in dieser Weise aufgebaut sind, vorzugsweise mit einem zentralen Mittelgang wie bei einem amerkanischen Stall, wobei ein einziges textiles Dach, die gesamte Anordnung überdeckt. Eine textile Abdeckung kann an den Giebelenden angebracht sein.

Es ist daher Aufgabe der Erfindung den Stand der Technik zu verbessern und insbesondere ein Planensystem zur Verfügung zu stellen, das nach dem Aufbau stabil ist und leicht aufzubauen und zu versenden ist.

Gegenstand der Erfindung ist ein Planensystem nach Anspruch 1. Das erfindungsgemäße Plannensystem weist vorzugsweise eine einzige zusammenhängende Plane auf, die vorzugsweise an ihren Längsseiten unten, vorzugsweise jeweils eine Tasche aufweist, die vorzugsweise Aussparungen aufweist, wobei in jeder Tasche, vorzugsweise über die gesamte Länge, ein Rohr jeweils in die Tasche eingezogen ist. An den Aussparungen in der Taschen ist das Rohr, das in der Tasche liegt, von Außen zugänglich und kann so vorzugsweise von einem Spanngurt erfaßt werden, um so das gesamte Planensystem abzuspannen, wobei die Aussparungen vorzugsweise an den beiden Enden der Planen des Planensystems und in der Mitte des Planensystems angebracht sind. Diese Plane kann an den Längsseiten noch nach unten durch eine Seitenplane verlängert werden, indem vorzugsweise ein Planengewebe, wie vorzugsweise ein Gittergewebe, das vorzugsweise beschichtet ist, vorzugsweise mit PVC beschichtet ist, dabei ist die Seitenplane an der Plane angebracht, wobei diese Seitenplane vorzugsweise aufrollbar und durch Riemen im aufgerollten Zustand fixierbar ist, wobei die Seitenplane dazu dient Seitenteile, wie Gitterpanele abzudecken, über denen sich das Planengewölbe, Planentunnel befindet. Diese Seitenplane weist auch eine Längstasche mit Aussparungen an der Unterseite auf, durch die ein Rohr zum Abspannen der Seitenplane eingeführt werden kann, wie bei der Plane oben bereits ausgeführt, und durch Spannseile mit Ratschenabspannvorrichtungen abgespannt werden kann, wie bei der Plane oben bereits ausgeführt.

An den beiden Enden, also am Eingang und Ausgang des Planensystems, das vorzugsweise ein Tunnel, also die Form eines Tunnels bildet, bildet die Plane eine Überlappung, also eine Fortsetzung der Plane über den jeweiligen Rundbogen am Eingang und am Ausgang, aus, wobei die Überlappung an ihrem äußersten Ende eine, vorzugsweise um die gesamte Überlappung, laufende Tasche aufweist, wobei vorzugsweise in den beiden Taschen ein Spanngurt durchgezogen werden kann, um das Planensystem am Eingang und am Ausgang vorzugsweise über die gesamte Überlappung abzuspannen. Dies geschieht vorzugsweise in dem sich an den beiden Enden des Spanngurtes, der durch die Tasche der Überlappung läuft, vorzugsweise eine Ratsche befindet, die jeweils an einem Hacken befestigt ist, der um ein Rohr oder eine Stange oder sonstigen Gegenstand greifen kann, an dem er Halt findet, um sodann den Spanngurt abzuspannen.

Die erfindungsgemäße Plane weist vorzugsweise in der Längsmitte, der Scheitellinie 6, also den Stellen, an denen die Plane, wenn sie in der Mitte der Breitseiten entlang der Längsseite gefaltet wird, weist die Plane an ihren beiden Enden, also an den Seiten, die die Firstseiten bilden werden, wenn die Plane im Planensystem aufgespannt ist, weist die Plane jeweils eine Öse auf, die vorzugsweise in ein Verschraubungssystem des Rohres passt, das sich jeweils am Scheitelpunkten der Rundbögen befindet, wobei das Verschraubungssystem derart ausgebildet ist, dass das Gewinde der Schraube vorzugsweise senkrecht nach oben ragt, so dass die Öse über die Schraube greifen kann.

Das Gerüst, das das Trägersystem bildet, über das die Plane gespannt wird, weist vorzugsweise querstehend, also in 90° zur Längsachse des Planensystems zwei nach unten offene Verstrebungen, in Form von Rohren 10, welche einen Halbkreis bilden, also Rundbögen auf.

Diese Rundbögen sind an den beiden Enden des tunnelförmigen Planensystems angebracht, bei einem längeren Planensystem können auch noch zusätzliche Rundbögen in der Mitte des tunnelförmigen Planensystems angeordnet werden. Ein Basisplanensystem ist vorzugsweise 2,4 m, 4,8 m, 7,2 m usw., also jeweils plus 2,4 m lang oder 3 m, 6 m, 9 m usw., also jeweils plus 3 m lang oder 3,6 m, 7,2 m 10,8 usw. jeweils plus 3,6 m lang oder 4 m, 8 m, 12 m usw., also jeweils plus 4 m und 2,4 m, 3 m, 3,6 m, 4 m, 5 m, 6 m breit, wobei die Länge und Breite des Planensystems vorzugsweise durch Elemente in Form von Gitterpanelen, wie handelsüblichen Weidepanelen vorgegeben wird, die vorzugsweise 2,4 m, 3 m, 3,6 m, 4 m lang sind und deren oberstes horizontales Rohr vorzugsweise 1,60 m hoch ist, auf die das erfindungsgemäße Planensystem montiert wird. Ein übliches Grundmodul, das 3 m lang ist und der Bogen eine Höhe von 1,20 ohne Befestigungselemente bis 1,75 m mit Befestigungselementen aufweist, läßt sich vorzugsweise mit weiteren Grundmodulen, um jeweils 3 m verlängern, so dass durch drei Grundmodule das Basisplanensystem auf 9 m Länge verlängert werden kann, wobei ein Grundmodul das Planensystem für sich ist, ohne auf Gitterpanelen montiert zu sein. Vorzugsweise weist ein Grundmodul nur 2 Rundbögen auf, eine Verlängerung weist vorzugsweise einen zusätzlichen Rundbogen auf. Vorzugsweise weist das erfindungsgemäße Planensystem alle 1,5 m, 1,6 m, 1,7 m, 1, 8 m 1, 9 m, 2 m, 2, 1 m, 2,2 m, 2, 3 m, 2, 4 m 2, 5 m, 2, 6 m, 2,7 m, 2,8 m, 2,9 m, 3 m Länge einen Rundbogen auf.

Das Planensystem ist vorzugsweise 2,4 m, 3 m, 3,6 m, 4 m, 5 m, 6 m breit, wobei die Breite jeweils um weitere 2,4 m, 3 m, 3,6 m oder 4 m verbreitert werden kann.

Die Längs- und Breitenelemente sind vorzugsweise Gitterpanele, wie handelsübliche Weidepanele, vorzugsweise in der Länge 2,4 m, 3 m, 3,6 m, 4 m, 5m, 6 m und einer Höhe von vorzugsweise 1,60 cm , also deren oberstes horizontales Rohr vorzugsweise 1,60 m hoch ist.

In der Mitte des Trägersystems im Scheitelpunkt, also an der obersten Stelle des Trägersystems, verläuft ein Trägerrohr im 90° Winkel zu den Rundbögen oder äquivalenten Systemen, wie dem rechteckigen Trägersystem, das vorzugsweise aus einem Stück oder bevorzugt aus mehreren Stücken bestehen kann, die jeweils an die Rundbögen stoßen und dort mittels Schellen befestigt werden. Dieses Trägerrohr verläuft also vorzugsweise längs der Längsachse des Planensystems in dessen Mitte. Diese Rundbögen, die vorzugsweise Halbkreis große Rohre aufweisen, sind über ein Rohr zwischen ihren Scheitelpunkten verbunden, wobei dieses Rohr im 90° Winkel zum jeweiligen Halbkreis, dem Rundbogen steht.

Das Trägersystem weist vorzugsweise unten noch zumindest zwei Traversen auf, die auf dem Boden aufliegen können oder an Panele, wie vorzugsweise handelsüblichen Gitterpanelen, wie Weidepanelen befestigt werden, wobei die Traversen als Grundträger, also vorzugsweise unten am Planensystem auf beiden Seiten, jeweils ein Rundrohr oder Vierkantrohr aufweisen, also vorzugsweise als Rundrohr oder Vierkantrohr ausgebildet sind, das zumindest auf der Oberseite eine Aufnahmevorrichtung für ein Rundrohr oder Vierkantrohr aufweist, also vorzugsweise selbst ein kurzes Rundrohr oder Vierkantrohr, das vorzugsweise senkrecht auf dem Rundrohr oder Vierkantrohr steht, also vorzugsweise einen Innenwinkel kleiner gleich 90° zum Rundrohr oder Vierkantrohr bildet, über das das andere Rundrohr oder Vierkantrohr geschoben werden kann, das den halbkreisförmigen Rundbogen bildet, über den die Plane gelegt wird und auf der Unterseite der Traverse Befestigungselemente aufweist, die vorzugsweise eine Befestigung, vorzugsweise mittels einer Verschraubung ermöglichen. Diese Befestigungselemente sind vorzugsweise Metallflacheisen, die im 90° Winkel zum Rundrohr oder Vierkantrohr stehen und Bohrungen aufweisen, an denen vorzugsweise die Schellen oder äquivalenten Befestigungssysteme geschraubt werden können, um diese Flacheisen und damit die Traverse mit Stützpfählen oder Rohren zu verbinden. Vorzugsweise weisen diese Flacheisen jeweils zwei Bohrungspaare auf, die von einander beabstandet sind, wobei ein Bohrungspaare vorzugsweise zur Befestigung für jeweils eine Schelle dient. Somit kann ein Befestigungselement an zwei Stellen an einem Pfosten befestigt werden. Diese Flacheisen werden vorzugsweise im 90 ° Winkel an den Grundträger geschweißt. Dieser Grundträger, der vorzugsweise durch Traversen gebildet wird, kann auch vorzugsweise an handelsübliche Gitterpanelen befestigt werden, die z.B. verwendet werden, um Flächen einzuzäunen. Die Traversen können dann an vorzugsweise den beiden obersten Längsrohren der Gitterpanele jeweils an den Flacheisen mit jeweils zwei Schellen vorzugsweise übereinander befestigt werden. Diese Flacheisen sind vorzugsweise so lang, dass sie über das nächste Längsrohr bündig greifen, so dass sich in den Enden der Flacheisen keine Schnur, Band oder Halfter verfangen kann.

Die Traversen können auch direkt mit Pfosten, die vorzugsweise einbetoniert sind, befestigt werden, zum Beispiel um ein im Boden eingelassenes Schwimmbad zu überdachen.

An einer Bohrungen in dem Flacheisen, an dem eine Schelle über eine Schraubverbindung befestigt sein kann, wird auch vorzugsweise eine Ratsche festgeschraubt, mit der der Spanngurt befestigt und gespannt werden kann, der vorzugsweise durch die Aussparung in der Tasche um das Rohr greift, das in der seitlichen Längstasche der Plane liegt. So befindet sich an jedem Flacheisen der Traverse vorzugsweise eine Ratsche mit Spanngurt zum Spannen der Plane. Eine Traverse weist vorzugsweise auf der Oberseite zwei Aufnahmevorrichtungen für ein Rundrohr oder Vierkantrohr auf, das den Rundbogen bildet und auf der Unterseite vorzugsweise zwei Befestigungselemente, bevorzugt zwei Flacheisen, auf.

Eine Traverse zur Verlängerung des Basisplanensystem kann auch mittels einer Traverse geschehen, die in die Grundtraverse zur Verlängerung gesteckt wird, in dem die beiden Grundrohre der jeweiligen Traversen zusammengesteckt werden und diese Verlängerungstraverse kann dann auch nur vorzugsweise auf der Oberseite vorzugsweise eine einzige Aufnahmevorrichtung für ein Rundrohr oder Vierkantrohr aufweisen, das den Rundbogen bildet und auf der Unterseite vorzugsweise ein Befestigungselement, bevorzugt ein Flacheisen aufweisen.

Bevorzugt weist die Traverse, die ein Rundrohr oder Vierkantrohr aufweist, das zumindest auf der Oberseite eine Aufnahmevorrichtung für ein Rundrohr oder Vierkantrohr aufweist, das vorzugsweise einen Winkel kleiner 90° in Richtung des aufgenommenen Rundbogenrohrs aufweist, um einen Halbkreis großen Bogen aus Rohren aufzunehmen.

Das erfindungsgemäße Planensystem kann z.B. in Verbindung mit handelsüblichen Gitterpanelen, an der Längsseite,vorzugsweise der Breitseite, eine Mehrzeweckhalle bilden, die als Garage, für Kraftfahrzeuge, Boote, Geräte aller Art oder auch als Stahl für Tiere, wie Pferde, Kühe, Schafe etc. dienen kann.

Ein weitere Gegenstand der Erfindung ist ein Überdachungsnachrüstsystem gemäß Anspruch 9, das bevorzugt eine Überdachung für eine durch zumindest zwei Gitterpaneelen eingezäunte Fläche dient. Figuren
**Figur 1**

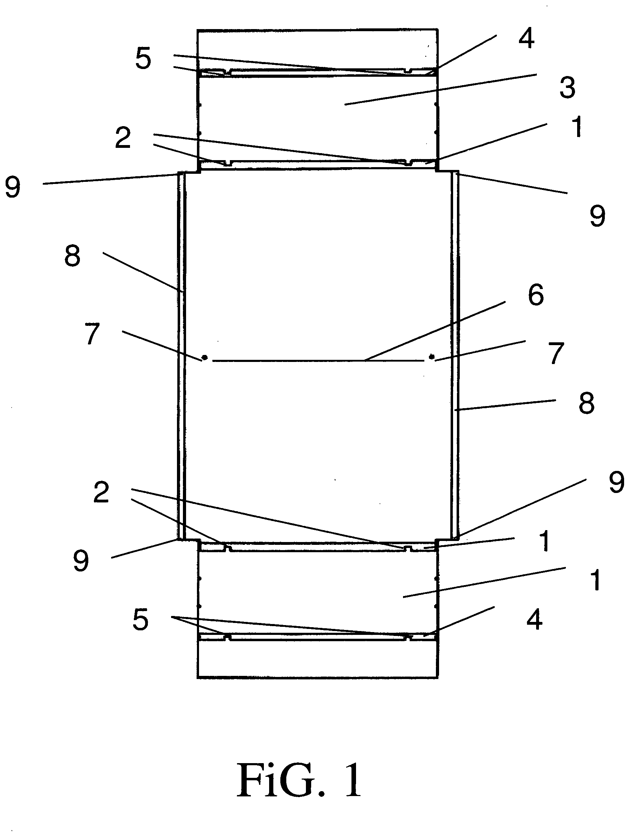

   Figur 1 zeigt die erfindungsgemäße Plane in Draufsicht. An der Längsseite der Plane sind die Längstaschen 1 mit den Aussparungen 2 zu sehen, durch die das Rohr, das in jeder Längstasche liegen wird, zu umfassen. An diese Plane ist eine Seitenplane 3 angebracht, die auch eine Längstasche 4 mit Aussparungen 5 an der Unterseite aufweist, durch die ein Rohr zum Abspannen der Seitenplane eingeführt werden kann. In der Mitte der Plane ist die Scheitellinie 6 zu sehen und die Ösen 7, die über das Gewinde der Befestigungsschraube gelegt werden, in denen das Befestigungsrohr über Schellen an den Rundbögen befestigt wird. Vorne und hinten an der Plane sind die Überlappungen 8 zu sehen, die über den vorderen und hinteren Rundbogen überlappend gelegt und durch die jeweils ein Spanngurt durch die Öffnungen 9 in einer Tasche der Überlappung, die sich über die gesamte Länge der Überlappung erstreckt, gezogen werden kann.
**Figur 2**

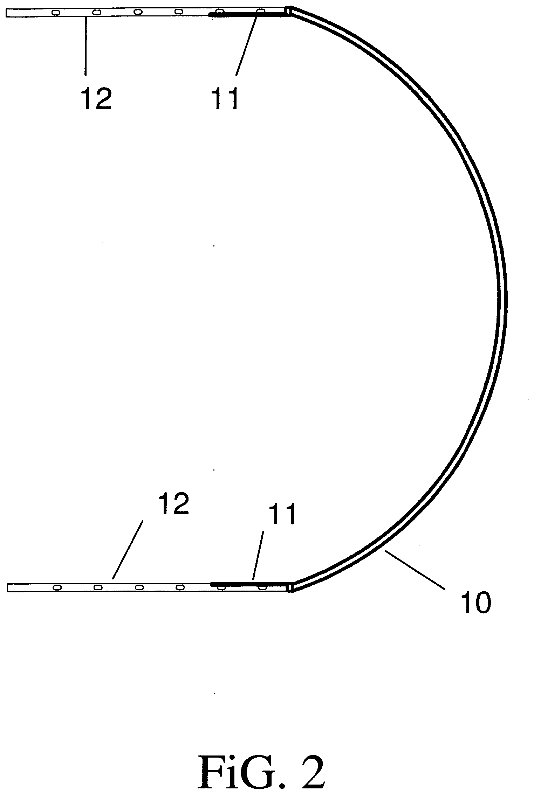

   Figur 2 zeigt einen der zumindest zwei Rundbögen 10 als Querschnitt. Der Rundbogen 10 ist über die Traverse 11 auf einem Gitterpaneel 12 befestigt.
**Figur 3**

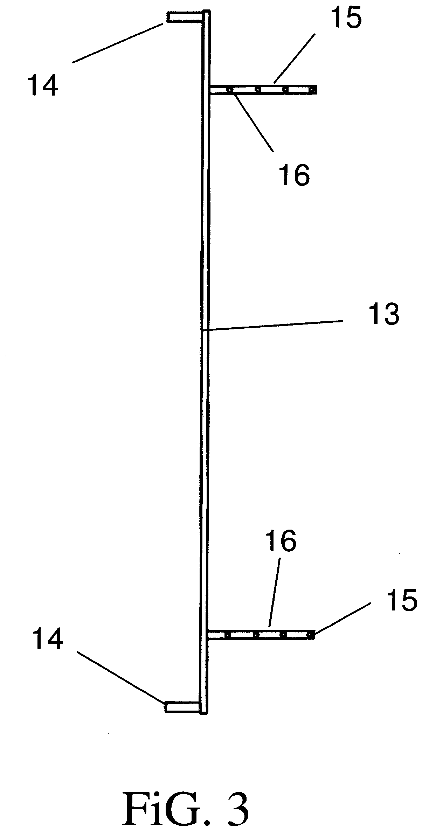

   In Figur 3 ist die erfindungsgemäße Traverse 11 mit dem Grundrohr 13 und den Aufnahmevorrichtungen 14, in die die Rundbögen gesteckt werden können, wobei diese vorzugsweise einen Winkel kleiner 90 ° zum Grundrohr aufweisen, um der Krümmung des Rundbogens Rechnung zu tragen. Des Weiteren steht nach unten zumindest ein Flacheisen 15 im 90 ° Winkel zum Grundrohr, an dem die Schellen und vorzugsweise die Ratsche des Spanngurtes befestigt werden können, dazu sind Bohrungen 16 vorgesehen, an denen Schraubverbindungen angebracht werden können.
**Figur 4**

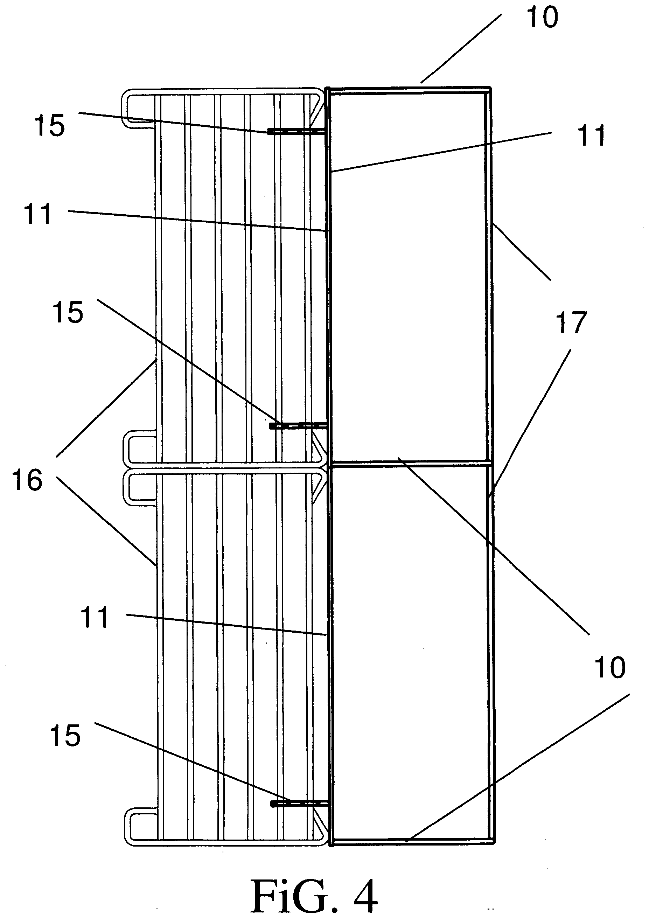

   In Figur 4 wird eine Seitenansicht der Längsseite des Trägersystems gezeigt. Dabei sind zwei Gitterpanele 16 unten zu sehen, an denen die zwei Traversen 11, mit zwei Flacheisen 15, und 15, mit einem einzigen Flacheisen 15, zu sehen ist, die über die Flacheisen 15 mittels Schellen (nicht gezeigt) befestigt an den Gitterpanelen befestigt sind. An der Traverse sind die Rundbögen 10 über die Aufnahmevorrichtungen an den Traversen 11 angebracht, oben am First ist Rohr 17 zu sehen, das die Rundbögen 10 stabilisiert, wobei das Rohr 17 vorzugsweise und über Schellenverbindungen mit den Rundbögen 10 verbunden ist.

## Patentansprüche

1. Planensystem, das eine Plane und ein Trägersystem aufweist, wobei die sine Plane über das Trägersystem spannbar ist, das Rohre aufweist, die ineinander gesteckt, über Verschraubungen und Spanngurte verbindbar sind und wobei das Planensystem mindestens zwei Traversen (11) aufweist, mit denen die Rohre des Trägersystem verbindbar sind, wobei die Traverse Steckverbindungsmöglichkeiten und Verschraubungsmöglichkeiten sowie eine Ratsche mit Spanngurt zum Spannen der Plane aufweist, **dadurch gekennzeichnet, dass** das Trägersystem, über das die Plane gespannt wird, zumindest an beiden Enden zwei nach unten offene Verstrebungen, in Form von Rohren (10), welche einen Halbkreis bilden, also Rundbögen, aufweist, die über ein Rohr (17) zwischen ihren Scheitelpunkten verbunden sind.

2. Planensystem nach Anspruch 1, **dadurch gekennzeichnet, dass** das Rohr (17) im 90° Winkel zum jeweiligen Rundbogen steht.

3. Planensystem nach einem oder mehreren der Ansprüche 1 bis 2, **dadurch gekennzeichnet, dass** die Traverse ein Rundrohr oder Vierkantrohr aufweist, das zumindest auf der Oberseite eine Aufnahmevorrichtung für ein Rundrohr oder Vierkantrohr aufweist und auf der Unterseite Befestigungselemete aufweist, die eine Verschraubung ermöglichen.

4. Planensystem nach einem oder mehreren der Ansprüche 1 bis 3, **dadurch gekennzeichnet, dass** die Traverse ein Rundrohr oder Vierkantrohr als Grundrohr aufweist, das zumindest auf der Oberseite eine Aufnahmevorrichtung für ein Rundrohr oder Vierkantrohr aufweist, das einen Winkel kleiner 90° in Richtung Rundbogen (10) aufweist, um einen Halbkreis großen Bogen aus Rohre aufzunehmen.

5. Planensystem nach einem oder mehreren der Ansprüche 1 bis 4, **dadurch gekennzeichnet, dass** der Spanngurt mit einer Ratsche gespannt ist, die an der Traverse (11) befestigt ist.

6. Planensystem nach einem oder mehreren der Ansprüche 1 bis 5, **dadurch gekennzeichnet, dass** die Plane an ihren beiden Firstseiten jeweils eine Öse (7) aufweist, die vorzugsweise in ein Verschraubungssystem des Rohres passt, das sich am Scheitelpunkten zwischen den Rundbögen befindet.

7. Planensystem nach einem oder mehreren der Ansprüche 1 bis 6, **dadurch gekennzeichnet, dass** die Plane jeweils an beiden Seiten längs eine Tasche (1) aufweist, in der sich jeweils ein Rohr befindet, an dem der Spanngurt eingreifen kann, um so das Planensystem an der Traverse (11) zu verspannen.

8. Planensystem nach einem oder mehreren der Ansprüche 1 bis 7, **dadurch gekennzeichnet, dass**, an den beiden Enden des Planensystems, also am Eingang und Ausgang des Planensystems, die Plane eine Überlappung 3, also eine Fortsetzung der Plane über den jeweiligen Rundbogen am Eingang und am Ausgang bildet, wobei die Überlappung 3 eine Tasche 4 aufweist, wobei vorzugsweise in den beiden Taschen 4 über die gesamte Taschenlänge ein Spanngurt durchgezogen werden kann, um das Planensystem am Eingang und am Ausgang abzuspannen.

9. Überdachungsnachrüstsystem, das ein Planensystem nach einem oder mehreren der Ansprüche 1 bis aufweist, **dadurch gekennzeichnet, dass** das Planensystem dafür geeignet ist, an einer vorhandenen Vorrichtung, vorzugsweise einer Pferdekoppel, einem Schwimmbecken, einem Zaunsystem oder an Koppelpaneelen befestigt zu werden, die überdacht werden soll.

## Claims

1. A tarpaulin system comprising a tarpaulin and a support system, the tarpaulin being able to be tensioned across the support system comprising tubes inserted into each other and for connecting by means of threaded connections and straps, and the tarpaulin system comprising at least two crossbars (11) by means of which the tubes of the support system can be connected, the crossbars comprising plug connection means and threaded connection means and a ratchet having a strap for tensioning the tarpaulins, **characterised in that** the support system across which the tarpaulins are tensioned comprises two braces open to the bottom at least at both ends, in the form of tubes (10) forming a semicircle, that is, circular arcs, connected by a tube (17) between the vertices thereof.

2. The tarpaulin system according to claim 1, **characterised in that** the tube (17) is at a 90° angle to each circular arc.

3. The tarpaulin system according to any one or more of the claims 1 through 2, **characterised in that** the crossbar comprises a round tube or a square tube comprising a receiving fixture for a round tube or square tube at least on the top side thereof and comprises attaching elements on the bottom side thereof for enabling a threaded connection.

4. The tarpaulin system according to any one or more of the claims 1 through 3, **characterised in that** the crossbar comprises a round tube or a square tube as a base tube, comprising a receiving fixture for a round tube or square tube at least on the top side thereof having an angle of less than 90° in the direction of the circular arc (10) for receiving a semicircle of large arcs made of tubes,

5. The tarpaulin system according to any one or more of the claims 1 through 4, **characterised in that** the tensioning strap being tensioned by means of a ratchet attached to the crossbar (11).

6. The tarpaulin system according to any one or more of the claims 1 through 5, **characterised in that** the tarpaulins each comprise an eye (7) at the two top sides thereof, preferably fitting in a threaded connection system of the tube present at the vertices between the arcs.

7. The tarpaulin system according to any one or more of the claims 1 through 6, **characterised in that** the tarpaulins each comprise a longitudinal pocket (1) on both sides in each of which a tube is present at which the tensioning strap can engage for tensioning the tarpaulin system on the crossbar (11).

8. The tarpaulin system according to any one or more of the claims 1 through 7, **characterised in that**, the tarpaulins form an overlap (3), that is, a continuing of the tarpaulins across each arc at the entrance and the exit, at both ends of the tarpaulin system, that is, at the entrance and exit of the tarpaulin system, wherein the overlap (3) comprises a pocket (4), wherein a tensioning strap can preferably be drawn through the two pockets (4) over the entire length of the pocket for tensioning the tarpaulin system at the entrance and exit.

9. A roofing retrofit system comprising a tarpaulin system according to any one or more of the claims 1 through 8, **characterised in that** the tarpaulin system is suitable for being attached to an existing fixture, preferably a paddock, a swimming pool, a fence system, or coupling panels to be roofed over,

## Revendications

1. Système de bâche comprenant une bâche et un système porteur, dans lequel la bâche peut être tendue sur le système porteur, lequel comprend des tubes qui sont insérés les uns dans les autres, qui peuvent être reliés par des connexions vissées et des sangles tendeuses, et dans lequel le système de bâche comprend au moins deux traverses (11) auxquelles les tubes du système porteur peuvent être reliés, la traverse comportant des possibilités de raccordement par emboîtement et des possibilités de raccordement par vissage ainsi qu'un cliquet avec une sangle tendeuse pour tendre la bâche, **caractérisé en ce que** le système porteur, sur lequel la bâche est tendue, présente au moins aux deux extrémités deux entretoises ouvertes vers le bas en forme de tubes (10), qui forment un demi-cercle, c'est-à-dire des arcs en demi-cercles, qui sont reliés par un tube (17) entre leurs sommets.

2. Système de bâche selon la revendication 1, **caractérisé en ce que** le tube (17) est à un angle de 90° par rapport à l'arc en demi-cercle correspondant.

3. Système de bâche selon l'une ou plusieurs des revendications 1 à 2, **caractérisé en ce que** la traverse présente un tube rond ou un tube carré, qui présente au moins sur sa face supérieure un dispositif d'accueil pour un tube rond ou un tube carré et, sur sa face inférieure, des éléments de fixation qui permettent un raccordement par vissage.

4. Système de bâche selon l'une ou plusieurs des revendications 1 à 3, **caractérisé en ce que** la traverse présente un tube rond ou un tube carré en tant que tube de base, qui présente au moins sur sa face supérieure un dispositif d'accueil pour un tube rond ou un tube carré présentant un angle inférieur à 90° dans la direction de l'arc en demi-cercle (10) pour accueillir un demi-cercle en grand arc composé de tubes.

5. Système de bâche selon l'une ou plusieurs des revendications 1 à 4, **caractérisé en ce que** la sangle tendeuse est tendue à l'aide d'un cliquet qui est fixé sur la traverse (11).

6. Système de bâche selon l'une ou plusieurs des revendications 1 à 5, **caractérisé en ce que** la bâche présente sur chacun de ses deux côtés de faite un oeillet (7) qui s'adapte de préférence dans un système de vissage du tube, qui est situé au sommet entre les arcs en demi-cercles.

7. Système de bâche selon l'une ou plusieurs des revendications 1 à 6, **caractérisé en ce que** la bâche présente le long de chacun des deux côtés une poche (1) dans laquelle se trouve respectivement un tube sur lequel la sangle tendeuse peut s'engager afin, ainsi, de tendre le système de bâche sur la traverse (11).

8. Système de bâche selon l'une ou plusieurs des revendications 1 à 7, **caractérisé en ce qu'**aux deux extrémités du système de bâche, donc à l'entrée et à la sortie du système de bâche, la bâche forme un recouvrement (3), donc un prolongement de la bâche sur l'arc en demi-cercle respectif à l'entrée et à la sortie, sachant que le recouvrement (3) comporte une poche (4), sachant qu'une sangle tendeuse peut de préférence être glissée dans les deux poches (4), sur toute la longueur des poches, pour tendre le système de bâche à l'entrée et à la sortie.

9. Système de mise à niveau d'un recouvrement, comprenant un système de bâche selon l'une ou plusieurs des revendications 1 à 8, **caractérisé en ce que** le système de bâche est approprié pour être fixé sur un dispositif existant, de préférence un paddock pour chevaux, une piscine, un système de clôture ou sur des panneaux de couplage, qui doit être recouvert.
